(19) Europäisches Patentamt
European Patent Office
Office européen des brevets

(11) EP 4 650 889 A1

(12) DEMANDE DE BREVET EUROPEEN

(43) Date de publication:
19.11.2025 Bulletin 2025/47

(51) Classification Internationale des Brevets (IPC):
*G05B 15/02* (2006.01)

(21) Numéro de dépôt: 25174623.6

(52) Classification Coopérative des Brevets (CPC):
**G05B 15/02;** G05B 2219/2642

(22) Date de dépôt: 06.05.2025

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: 15.05.2024 FR 2404970

(71) Demandeur: **Somfy Activites SA**
**74300 Cluses (FR)**

(72) Inventeurs:
• **BERNABEU, Noé**
**74300 Cluses (FR)**
• **RAYBAUD, Blaise**
**74300 Cluses (FR)**

(74) Mandataire: **Germain Maureau**
**12, rue Boileau**
**69006 Lyon (FR)**

(54) **PROCÉDÉ DE GESTION D'UNE INSTALLATION DOMOTIQUE**

(57) Procédé de gestion (200) d'une installation domotique (100) comprenant :
- une étape de pilotage (S1) d'une position de la protection solaire (3) suivant un premier mode de pilotage ($M_{j\alpha\,(T1)}$);
- une étape de mesure (S2) de la température intérieure ($t_{int}$) du bâtiment (1);
- une première étape de détermination (S3) d'une période d'inconfort ($T_{inc}$);
- une deuxième étape de détermination (S4) d'un indicateur d'inconfort (DH, DH+($t_{incmax}$), DH-($t_{incmin}$)) en fonction d'un cumul temporel d'un écart entre la température intérieure ($t_{int}$) et la température d'inconfort ($t_{incmax}$, $t_{incmin}$), sur la période d'inconfort ($T_{inc}$) ;
- une étape d'évaluation (S5) d'une deuxième valeur ($\alpha^{T2}$) du paramètre de réglage ($\alpha$) en fonction d'une comparaison entre l'indicateur d'inconfort (DH, DH+($t_{incmax}$), DH-($t_{incmin}$)) et un critère d'évaluation ;
- une étape d'ajustement (S6) d'un deuxième mode de pilotage ($M_{J\alpha\,(T2)}$) en prenant en compte la deuxième valeur ($\alpha^{JT2}$) du paramètre de réglage ($\alpha$).

[Fig. 1]

EP 4 650 889 A1

**Description**

L'invention concerne un procédé et un terminal pour une gestion d'un confort thermique intérieur d'un bâtiment, comprenant une installation domotique munie d'au moins une protection solaire motorisée, une unité de gestion d'une position prise par la protection solaire au cours du temps, et au moins un dispositif de mesure d'une température intérieure du bâtiment.

Un bâtiment à usage domestique ou professionnel dispose d'un ensemble d'éléments actifs, comme des dispositifs de climatisation ou de chauffage, ou passifs, comme par exemple des protections solaires telles que des volets roulants ou des stores, dont un comportement, notamment par le biais d'un pilotage automatique, a une influence forte sur une évolution d'un confort thermique, c'est-à-dire une température intérieure du bâtiment, et d'un confort visuel intérieur.

On appelle pilotage d'une protection solaire une modification des positions de la protection solaire au cours du temps entre une position déployée ou déroulée dans laquelle elle arrête au moins une partie d'un rayonnement solaire, et une position repliée ou enroulée dans laquelle elle arrête une partie moins importante du rayonnement solaire. Un ratio de fermeture de la protection solaire correspond à une position intermédiaire comprise entre la position repliée ou enroulée et la position déployée ou déroulée. Lorsque le ratio de fermeture est égal à 1, la position intermédiaire est confondue avec la position déployée ou déroulée. Lorsque le ratio de fermeture est égal à 0, la position intermédiaire est confondue avec la position repliée ou enroulée.

Il est difficile, pour un utilisateur, de prévoir un impact du pilotage, ou d'une régulation, des éléments passifs, tel qu'une ouverture d'un volet, sur l'évolution de la température intérieure. En particulier, le pilotage des protections solaires, c'est-à-dire une commande d'ouverture ou de fermeture de la protection solaire, en interagissant directement avec l'extérieur a un impact direct et important sur le confort thermique et visuel.

Un pilotage, ou une gestion, manuelle n'est pas optimale d'un point de vue énergétique car il est difficile pour un occupant du bâtiment de savoir exactement quelle est la position idéale de la protection solaire à chaque instant, et à quel moment il doit l'ouvrir ou la fermer. De plus, en cas d'inoccupation du bâtiment ou lorsque les occupants dorment, les mouvements sont impossibles contrairement à un pilotage automatique qui assure en continu le positionnement des protections. Il est donc important de pouvoir gérer le pilotage automatique de manière optimale. Il est connu de mettre en œuvre une gestion ou un pilotage automatisé des protections solaires grâce à un ensemble de capteurs, par exemple de capteurs intérieurs et extérieurs de température ou des capteurs d'éclairement extérieurs, en lien avec une centrale domotique. Celle-ci peut également récupérer des données ou des prévisions météorologiques pour affiner la gestion automatisée. Toutefois, cela entraine une multiplication les informations à traiter. Des modes de pilotage sont déterminés sur la base des informations récupérées. Généralement plusieurs modes de pilotage sont proposés dépendant notamment de la saison: un mode favorisant des apports solaires dit scénario Hiver, et un mode de protection solaire dit scénario Été (pour des situations dans l'hémisphère Nord). Dans la version la plus simple, ces modes sont lancés sur la base d'une horloge donnant une date ou d'une information fournie par un capteur d'ensoleillement en façade.

Des périodes d'inter-saison, c'est-à-dire de transition entre le scénario Hiver et le scénario Eté sont plus difficiles à traiter, de même que des journées d'été ou d'hiver avec des conditions de chaud ou froid inhabituels. Celles-ci génèrent souvent des situations d'inconfort thermique ou lumineux pour les occupants.

Le brevet EP2682825 propose un procédé de détermination des conditions climatiques d'une journée, ledit procédé étant basé sur une comparaison de la température extérieure obtenue au lever du soleil avec différents seuils. Ce procédé permet ainsi de déterminer des conditions climatiques hivernales, automnales, printanières ou estivales. La gestion des protections solaires est adaptée pour privilégier ou limiter au juste niveau les apports solaires en fonction des conditions climatiques déterminées.

Cette solution a l'avantage d'être simple à mettre en oeuvre et nécessite un faible nombre de données pour fonctionner. Cependant, cette solution ne donne pas entièrement satisfaction car elle est trop dépendante de la température extérieure qui ne donne pas un état thermique à l'intérieur du bâtiment car celui-ci varie en fonction de l'isolation thermique ou d'une présence de baie vitrée par exemple.

L'invention a pour but de remédier à tout ou partie des inconvénients précités en assurant un pilotage automatique d'une protection solaire qui soit simple et optimisée toute l'année de façon adaptée au bâtiment concerné, quelles que soient les conditions climatiques et thermiques extérieures.

Autrement dit, la solution proposée permet une gestion des protections solaires adaptée au cours de l'année aux conditions climatiques, les scenarii Hiver et Été n'étant plus que deux scenarii extrêmes (en hiver, favoriser 100% des apports solaire, en Été limiter 100% des apports solaires), d'un ensemble de scenarii définissant des positions des protections solaires favorisant ou limitant les apports solaires au moins partiellement. L'invention permet donc un pilotage des protections solaires sur la base d'un mode de pilotage indépendant de la « saison » au sens du calendaire, mais déterminé en fonction de la température intérieure.

L'invention a pour objet un procédé de gestion d'une installation domotique d'un bâtiment comprenant au moins une protection solaire motorisée, une unité de gestion d'une position prise par la protection solaire au cours du temps, et au moins un dispositif de mesure d'une température intérieure du bâtiment, le procédé étant mis en œuvre par l'unité de gestion et comprenant :

- une étape de pilotage sur une première période de temps de pilotage dans laquelle la position de la protection solaire est déterminée en fonction d'un premier mode de pilotage prenant en compte au moins une première valeur d'un paramètre de réglage ;
- une étape de mesure de la température intérieure du bâtiment pendant une période de temps de mesure;
- une première étape de détermination dans laquelle au moins une période d'inconfort est déterminée en fonction d'un critère de comparaison entre la température intérieure du bâtiment et au moins une température d'inconfort;
- une deuxième étape de détermination dans laquelle au moins un indicateur d'inconfort est déterminé au moins en fonction d'un cumul temporel d'un écart entre la température intérieure du bâtiment et la température d'inconfort, sur l'au moins une période d'inconfort ;
- une étape d'évaluation d'une deuxième valeur du paramètre de réglage dans laquelle la deuxième valeur du paramètre de réglage est déterminée en fonction d'une comparaison entre l'au moins un indicateur d'inconfort et un critère d'évaluation ;
- une étape d'ajustement dans laquelle un deuxième mode de pilotage pour une deuxième période de temps de pilotage successive à la première période de temps de pilotage est déterminé en prenant en compte l'au moins une deuxième valeur du paramètre de réglage.

L'étape de pilotage a pour objet de piloter, c'est-à-dire modifier une position, de la protection solaire au cours d'une période de temps de pilotage en fonction d'un mode de pilotage, et plus particulièrement au cours d'une première période de temps de pilotage en fonction d'un premier mode de pilotage.

Le mode de pilotage définit un comportement, c'est-à-dire par exemple un taux de fermeture, de la protection solaire en fonction de différentes données d'entrée, comme par exemple une valeur de la luminosité et une température intérieure.

Concrètement, avec les exemples ci-dessus, une mesure de luminosité importante pourra entrainer :

- une fermeture de la protection solaire si le mode de pilotage cherche à limiter une hausse de la température intérieure, ou
- entrainer un taux de fermeture de la protection solaire de 50% uniquement si la température intérieure dépasse un seuil de température donnée.

En effet, selon des conditions météorologiques extérieures un utilisateur ne souhaite pas avoir le même comportement de la protection solaire pour une même donnée d'entrée. Dans l'hémisphère nord, pendant la saison de l'hiver, un utilisateur souhaite favoriser la luminosité, tandis que pendant la saison de l'été, l'utilisateur souhaite diminuer la luminosité afin de limiter une augmentation de la température intérieure.

Le premier mode de pilotage prend en compte une première valeur d'un paramètre de réglage. Le paramètre de réglage est donc une grandeur permettant de modifier le mode de pilotage de sorte à l'adapter aux conditions météorologiquces extérieures. Le paramètre de réglage permet une adaptation dynamique du mode de pilotage au cours de l'année. Autrement dit, le paramètre de réglage modifie le comportement de la protection solaire en fonction des données d'entrée. A chaque paramètre de réglage est associé au moins un mode de pilotage.

Selon un mode de réalisation, à chaque paramètre de réglage est associé une pluralité de mode de pilotage.

Selon un mode de réalisation, le paramètre de réglage est sélectionné parmi un ensemble discret ordonné de paramètre de réglage.

Autrement dit, le paramètre de réglage ne peut pas prendre n'importe quelle valeur, mais uniquement celles listées. Il y a donc au moins autant de modes de pilotage que de valeurs dans l'ensemble des valeurs du paramètre de réglage. Par exemple, il y a deux modes de pilotage pour chaque valeur du paramètre de réglage. Il existe donc un ensemble discret de mode de pilotage associé.

L'ensemble des valeurs du paramètre de réglage étant ordonné ou classé, les modes de pilotage associés sont donc également classés ou ordonnés.

Selon une caractéristique, l'ensemble discret ordonné de paramètre de réglage comprend entre 1 et n valeurs, par exemple entre 1 et 6 valeurs, de préférence entre 1 et 3 valeurs.

Selon un mode de réalisation, le paramètre de réglage est un entier positif.

Selon un mode de réalisation, les valeurs de l'ensemble discret de valeurs du paramètre de réglage sont ordonnées de manière croissante.

De manière alternative, les valeurs de l'ensemble discret de valeurs du paramètre de réglage sont ordonnées de manière décroissante.

Ainsi, le paramètre de réglage varie entre deux valeurs extrêmes.

Le nombre de valeur du paramètre de réglage et donc le nombre de mode de pilotage diffère assez largement d'un nombre de saisons de sorte qu'un ajustement plus fin peut avoir lieu entre des modes de pilotage extrêmes.

Par exemple, un des modes de pilotage extrêmes, par la suite appelé mode Hiver, correspond à un mode dans lequel on favorise au maximum les apports solaires pour chauffer l'intérieur du bâtiment par un positionnement approprié de la protection solaire, majoritairement replié ou relevé. Dans l'autre mode extrême, par la suite appelé mode Eté, on inhibe au maximum les apports solaires, par un positionnement approprié de la protection solaire, majoritairement déroulé ou déployé. Les modes de pilotage intermédiaires présentent des pondérations dégressives entre ces deux modes extrêmes.

Selon l'invention, le paramètre de réglage est réévalué pour la deuxième période de temps de pilotage en fonction des variations de la température intérieure, notamment des variations constatées sur la période de temps de mesure.

L'étape de mesure enregistre pendant la période de temps de mesure la température intérieure du bâtiment donnée par au moins un capteur de température. La période de temps de mesure est donc inférieure, égale, ou supérieure à la première période de temps de pilotage.

Plus la période de temps de mesure est longue par rapport à la première période de temps de pilotage, plus un changement de mode de pilotage entre la première et la deuxième période de temps de pilotage présente de l'inertie, c'est-à-dire que le comportement de la protection solaire varie peu entre la première période de temps de pilotage et la deuxième période de temps de pilotage. A l'inverse, plus la période de temps de mesure est courte par rapport à la première période de temps de pilotage, plus le changement de mode de pilotage présente des changements importants.

L'au moins une période d'inconfort est une période inférieure ou égale à la période de temps de mesure. La période d'inconfort est déterminée en fonction d'un critère de comparaison entre la température intérieure du bâtiment qui a été mesurée sur la période de temps de mesure et au moins une température d'inconfort.

La température d'inconfort est une donnée fixe ou variable en fonction du premier mode de pilotage.

On peut considérer une température d'inconfort maximum qui représente un seuil haut au-delà duquel l'utilisateur considère que la température intérieure du bâtiment est trop élevée, c'est-à-dire qu'il fait trop chaud.

Selon un mode de réalisation, la période d'inconfort est égale à la période pendant laquelle la température intérieure du bâtiment est supérieure à la température d'inconfort maximum.

On peut considérer une température d'inconfort minimum qui représente un seuil bas au-delà duquel l'utilisateur considère que la température intérieure du bâtiment est trop basse, c'est-à-dire qu'il fait trop froid.

Selon un mode de réalisation, la période d'inconfort est égale à la période pendant laquelle la température intérieure du bâtiment est inférieure à la température d'inconfort minimum.

La température d'inconfort est donc un seuil de comparaison de la température intérieure permettant de déterminer la période d'inconfort.

La période de temps de mesure peut comprendre une ou une pluralité de période d'inconfort. Chaque période d'inconfort est séparée d'une autre période d'inconfort par une période de confort. Une période de confort correspond à une période de la période de temps de mesure pendant laquelle le critère de comparaison entre la température intérieure du bâtiment et l'au moins une température d'inconfort n'est pas validée. Il y a donc une période de confort entre deux périodes d'inconfort.

La période d'inconfort est une somme des instants pour lesquelles le critère de comparaison est rempli.

L'indicateur d'inconfort est déterminé en fonction du cumul temporel de l'écart entre la température intérieure du bâtiment et la température d'inconfort sur la période d'inconfort. L'indicateur d'inconfort s'exprime en degrés.heures. L'indicateur d'inconfort dépend de la température d'inconfort mais également de la période d'inconfort. L'écart entre la température intérieure et la température d'inconfort est l'écart au-dessus ou en dessous de la température d'inconfort, selon si la température d'inconfort est une température d'inconfort maximum ou minimum.

L'indicateur d'inconfort représente les degrés.heures passés au-dessus, ou en dessous, de la température d'inconfort. L'indicateur d'inconfort est donc un indicateur d'inconfort chaud s'il se base sur la température d'inconfort maximum. Dans ce cas, l'indicateur est déterminé au moins en fonction du cumul temporel des dépassements de la température intérieure au-dessus de la température d'inconfort maximum. L'indicateur d'inconfort est donc un indicateur d'inconfort froid s'il se base sur une température d'inconfort minimum. Dans ce cas, l'indicateur est déterminé au moins en fonction du cumul temporel des déficits de la température intérieure en-dessous de la température d'inconfort minimum.

Plus l'indicateur d'inconfort est important, plus le temps d'inconfort et/ou l'écart entre la température intérieure du bâtiment et la température d'inconfort a été important.

Le cumul temporel de l'écart entre la température intérieure du bâtiment et la température d'inconfort sur la période d'inconfort correspond également à l'intégrale temporelle de l'écart, au-dessus, ou en-dessous, de la température intérieure du bâtiment par rapport à la température d'inconfort, sur la période d'inconfort.

Selon un mode de réalisation, un indicateur d'inconfort chaud total est déterminé au moins en fonction d'un cumul des indicateurs d'inconfort chaud détectés sur la période de temps de mesure.

Selon un mode de réalisation, un indicateur d'inconfort froid total est déterminé au moins en fonction d'un cumul des indicateurs d'inconfort froid détectés sur la période de temps de mesure. L'étape d'évaluation de la deuxième valeur du paramètre de réglage est effectuée en fonction de l'indicateur d'inconfort ou de l'indicateur d'inconfort chaud/froid total.

Plus particulièrement, la deuxième valeur du paramètre de réglage est déterminée en fonction d'une comparaison entre l'au moins un indicateur d'inconfort et un critère d'évaluation.

Le critère d'évaluation peut dépendre de la période de temps de mesure.

L'étape d'ajustement détermine le mode de pilotage qui sera mis en œuvre sur une deuxième période de temps de pilotage successive à la première période de temps de pilotage en prenant en compte la nouvelle valeur du paramètre de réglage.

L'invention a ainsi pour effet d'ajuster, à chaque période de temps de pilotage, la valeur du paramètre de réglage, et donc le mode de pilotage, pour s'adapter aux conditions intérieures mesurées sur au moins une partie de la période de temps précédent la deuxième période de temps de pilotage. Le mode de pilotage ne correspond pas ainsi à une saison, mais varie avec le paramètre de réglage lorsque l'indicateur d'inconfort augmente. L'ajustement du paramètre de réglage permet de s'adapter aux changements climatiques entre saisons mais également d'un jour à l'autre à l'intérieur d'une même saison.

L'invention peut également présenter une ou plusieurs des caractéristiques suivantes prises seules ou en combinaison.

Selon un mode de réalisation, le procédé de gestion comprend une étape d'initialisation dans laquelle au moins une valeur d'initialisation du paramètre de réglage est déterminée.

Selon un mode de réalisation, la valeur d'initialisation du paramètre de réglage correspond à un minimum du paramètre de réglage. De manière alternative, la valeur d'initialisation du paramètre de réglage correspond à un maximum du paramètre de réglage. De manière alternative, la valeur d'initialisation du paramètre de réglage correspond à une valeur moyenne ou médiane entre le minimum et le maximum du paramètre de réglage. La valeur d'initialisation du paramètre de réglage peut également être arbitraire entre le minimum et le maximum du paramètre de réglage et saisie par un installateur ou un utilisateur.

Selon un mode de réalisation, la valeur d'initialisation du paramètre de réglage est déterminée en fonction d'une date calendaire de l'initialisation.

Selon un mode de réalisation, la première période de temps de pilotage et la deuxième période de temps de pilotage sont égales à 24h.

Selon un mode de réalisation, la période de temps de mesure est au moins égale à la première période ou la deuxième période de temps de pilotage.

Ainsi un nouveau mode de pilotage est défini quotidiennement.

Selon un mode de réalisation, la deuxième valeur du paramètre de réglage est modifiée en fonction de la première valeur du paramètre de réglage et d'une valeur de décalage.

La valeur de décalage correspond à la différence ou au nombre d'intervalle entre deux valeurs de l'ensemble discret de valeurs du paramètre de réglage. La valeur de décalage détermine la nouvelle valeur du paramètre de réglage, et donc le nouveau mode de pilotage.

Selon un mode de réalisation, la valeur de décalage correspond à un nombre entier.

Selon un mode de réalisation, la valeur de décalage correspond à un décalage compris entre un intervalle et cinq intervalles, et de préférence entre un intervalle et trois intervalles dans l'ensemble discret ordonné de valeurs du paramètre de réglage.

Ainsi, le paramètre de réglage ou le mode de pilotage, s'adapte plus rapidement aux changements climatiques.

La valeur de décalage indique un glissement sur l'ensemble discret de valeurs du paramètre de réglage vers la nouvelle valeur du paramètre de réglage, et donc le nouveau mode de pilotage. La deuxième valeur du paramètre de réglage est donc dépendante de la première valeur du paramètre de réglage.

La deuxième valeur du paramètre de réglage est donc déterminée par un ajustement de la première valeur du paramètre de réglage.

Le nouveau mode de pilotage est déterminé, par glissement sur la liste des modes vers l'un des modes extrêmes. Une inertie du glissement, déterminé notamment par une valeur de la valeur de décalage, permet à la fois de prendre en compte des changements de température extérieure d'un jour à l'autre et des changements de température extérieure à plus large échelle de temps. Selon un mode de réalisation, le paramètre de réglage varie uniformément sur l'ensemble discret de valeurs du paramètre de réglage.

Ainsi, une valeur de décalage de deux intervalles modifie deux fois plus le paramètre de réglage qu'une valeur de décalage d'un intervalle.

Selon un mode de réalisation, une étape de pilotage sur la deuxième période de temps de pilotage intervient à partir de la fin de la première période de temps de pilotage.

Ainsi un mode de pilotage est déterminé pour une période de temps complète et on évite tout ajustement intempestif qui interviendrait pendant la période.

Dans certains modes de réalisation, le critère d'évaluation s'exprime en degrés.heures.

Le critère d'évaluation correspond à un seuil de comparaison pour l'indicateur d'inconfort. Le critère d'évaluation peut être fonction de la période de temps de mesure.

Dans certains modes de réalisation, la deuxième valeur du paramètre de réglage est déterminée en fonction d'un quotient arrondi à l'entier inférieur de l'indicateur d'inconfort par le critère d'évaluation.

Autrement dit, le quotient, arrondi à l'entier inférieur, d'une division de l'indicateur d'inconfort par le critère d'évaluation est déterminé. Ensuite la deuxième valeur du paramètre de réglage est déterminée en fonction de ce quotient.

Dans certains modes de réalisation, la valeur de décalage dépend du quotient, par exemple est égale au quotient.

Dans certains modes de réalisation, la deuxième valeur du paramètre de réglage est déterminée en fonction du quotient arrondi à l'entier inférieur de l'indicateur d'inconfort chaud ou froid total par le critère d'évaluation. Le quotient représente une intensité de l'inconfort par rapport au critère d'évaluation et permet ainsi de modifier la valeur du paramètre de réglage en fonction de cette intensité.

Dans certains modes de réalisation, le procédé comprend une étape de définition dans laquelle un paramètre de préférence thermo-lumineux est déterminé par un utilisateur.

Le paramètre de préférence thermo-lumineux correspond à un paramètre permettant à l'utilisateur d'indiquer s'il souhaite favoriser un confort lumineux ou prioriser un confort thermique dans le mode de pilotage de la protection solaire.

Suite à l'étape de définition par l'utilisateur, le paramètre de préférence thermo-lumineux est fixe sur la première période de temps de pilotage et sur la deuxième période de temps de pilotage. Dans certains modes de réalisation, le premier mode de pilotage et le deuxième mode de pilotage sont fonctions du paramètre de préférence thermo-lumineux.

Le mode de pilotage est donc dépendant de l'au moins une deuxième valeur du paramètre de réglage et du paramètre de préférence thermo-lumineux. Ainsi, il existe autant de mode de pilotage qu'il y a de nombre de valeur de paramètre de réglage multiplié par le nombre de valeur du paramètre de préférence thermo-lumineux.

Dans certains modes de réalisation, le paramètre de préférence thermo-lumineux est sélectionné dans un ensemble discret ordonné de valeurs du paramètre de préférence thermo-lumineux. Selon une caractéristique, l'ensemble discret ordonné de paramètre de préférence thermo-lumineux comprend entre 1 et m valeurs, par exemple entre 1 et 10 valeurs, de préférence entre 1 et 5 valeurs.

Selon un mode de réalisation, le paramètre de préférence thermo-lumineux est un entier positif. Dans certains modes de réalisation, le premier mode de pilotage et/ou le deuxième mode de pilotage comprend au moins un ratio de fermeture de l'au moins une protection solaire motorisée, en fonction d'une comparaison de la température intérieure à une température d'actionnement minimale, et une température d'actionnement maximale.

Autrement dit, chaque mode de pilotage fait varier le ratio de fermeture de l'au moins une protection solaire suivant si un critère de comparaison de la température intérieure par rapport à la température d'actionnement minimale et la température d'actionnement maximale est validé. Le ratio de fermeture correspond à une position intermédiaire comprise entre une position repliée ou enroulée et une position déployée ou déroulée. Lorsque le ratio de fermeture est égal à 1, la position intermédiaire est confondue avec la position déployée ou déroulée. Lorsque le ratio de fermeture est égal à 0, la position intermédiaire est confondue avec la position repliée ou enroulée.

Dans certains modes de réalisation, au moins le ratio de fermeture, et/ou la température d'actionnement minimale, et/ou la température d'actionnement maximale sont déterminés en fonction de la première valeur du paramètre de réglage.

Dans certains modes de réalisation, au moins le ratio de fermeture, et/ou la température d'actionnement minimale, et/ou la température d'actionnement maximale sont déterminés en fonction du paramètre de préférence thermo-lumineux.

Ainsi, le ratio de fermeture, et/ou la température d'actionnement minimale, et/ou la température d'actionnement maximale sont différents pour chaque mode de pilotage.

Dans certains modes de réalisation, l'au moins une température d'inconfort est déterminée en fonction de la température d'actionnement minimale.

L'invention porte également sur un terminal d'une installation domotique mettant en œuvre un procédé selon l'invention.

L'invention sera mieux comprise, grâce à la description ci-après, qui se rapporte à un mode de réalisation selon la présente invention, donné à titre d'exemple non limitatif et expliqué avec référence aux dessins schématiques annexés, dans lesquels :

[FIG. 1] est une représentation schématique d'un bâtiment comprenant une installation domotique mettant en œuvre un procédé conforme à l'invention;

[FIG. 2] est une coupe schématique transversale d'une protection solaire de l'installation domotique de la figure 1,

[FIG. 3] est une vue schématique en perspective de la protection solaire illustrée à la figure 2,

[FIG. 4] est un diagramme illustrant le procédé selon l'invention,

[Fig. 5] est un graphique illustrant la température intérieure en fonction du temps.

La solution proposée ici est relative à un procédé de gestion 200 automatique d'une position d'une protection solaire 3 au cours du temps permettant d'agir sur un confort thermique et lumineux d'une zone d'un bâtiment 1.

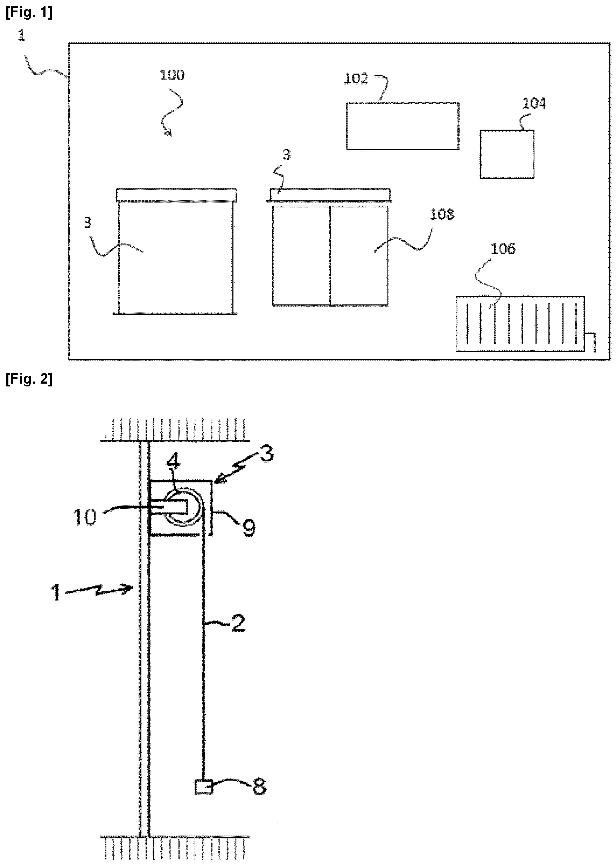

Comme illustré à la figure 1, un bâtiment 1 comprend une installation domotique 100 comprenant une protection solaire motorisée 3. L'installation domotique 100 comprend une unité de gestion 102 d'une position prise par la protection solaire 3 au cours du temps.

L'installation 100 comprend également au moins un dispositif de mesure 104 de la température intérieure $t_{int}$ du bâtiment, notamment d'une pièce du bâtiment 1 associée à la protection solaire 3, c'est-à-dire dans une pièce du bâtiment 1 comprenant au moins une ouverture 108 qui peut être masquée ou non ou partiellement par la protection solaire 3. Le dispositif de mesure 104 comprend également une mémoire dans laquelle peuvent être mémorisées des données de température intérieure $t_{int}$ à intervalles sensiblement réguliers sur une période prédéfinie, par exemple sur 24h.

D'autres paramètres associés au confort intérieur du bâtiment 1 peuvent également être mesurés, notamment un degré de luminosité, un degré d'hygrométrie ou une grandeur composite définie comme une fonction des grandeurs précédemment citées, ou une prévision de ces paramètres.

Selon le mode de réalisation représenté, l'installation 100 comprend un dispositif actif 106 pour une fourniture d'apports thermiques à l'intérieur du bâtiment 1, tel que par exemple un chauffage, une climatisation ou une pompe à chaleur réversible. Dans un mode de fonctionnement de l'installation 100, le dispositif actif fonctionne de manière indépendante par rapport à l'unité de gestion 102. Dans un mode de fonctionnement alternatif, l'unité de gestion et le dispositif actif partagent un certain nombre de composantes, par exemple le dispositif de mesure 104 de la température intérieure $t_{int}$ peut être commun au dispositif actif et à l'unité de gestion.

La protection solaire 3 est installée à l'extérieur ou à l'intérieur du bâtiment, en particulier à proximité d'une ouverture 108 du bâtiment. Une ouverture 108 est par exemple une fenêtre, une porte-fenêtre ou une porte vitrée. La protection solaire est avantageusement un store d'intérieur ou d'extérieur en toile ou muni de lames orientables. La présente invention s'applique cependant à tous les types de protection solaire.

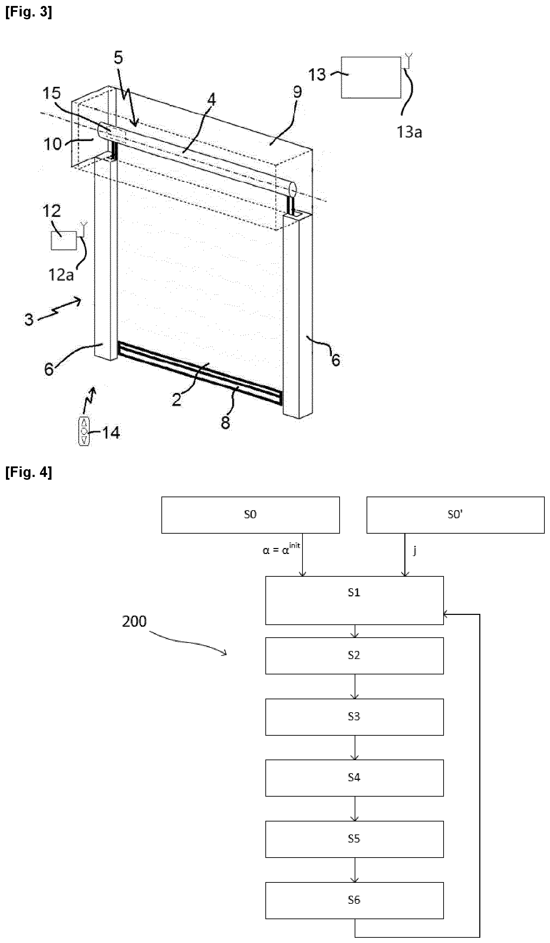

Comme représenté sur les figures 2 et 3, la protection solaire 3 comprend une toile 2 fixée par une de ses extrémités sur un tube d'enroulement 4, disposé à l'intérieur d'un coffre 9 et entraîné par un actionneur électromécanique 5, et par l'autre extrémité à une barre lestée 8. La protection solaire 3, et plus particulièrement la toile 2 est mobile entre une position enroulée ou repliée, en particulier haute, dans laquelle la toile 2 découvre l'ouverture 108 au niveau de laquelle la protection solaire est positionnée, et une position déroulée ou déployée, en particulier basse, dans laquelle la toile 2 couvre l'ouverture et bloque ainsi au moins partiellement le rayonnement solaire à travers l'ouverture 108. Le déploiement de la toile 2 peut être guidé par des coulisses 6.

De manière connue, l'actionneur électromécanique 5 est fixé sur une structure porteuse 9 liée au bâtiment 1 et inséré dans le tube d'enroulement 4 pour entraîner celui-ci en rotation de sorte à dérouler ou enrouler la toile 2.

Dans le cas d'une protection solaire de type store à lames, les différentes lames du store sont de préférence suspendues via des cordons destinés à être enroulés sur le tube d'enroulement ou déroulés du tube d'enroulement de sorte à replier ou déployer l'écran.

L'actionneur électromécanique 5 est commandé par une unité de commande locale 12 pouvant être munie d'une antenne 12a. L'unité de commande locale 12 prend la forme d'un interrupteur mural, ou d'une télécommande.

L'installation 100 peut également comprendre une unité de commande centrale 13 pouvant être munie d'une antenne 13a, qui assure un rôle de passerelle entre l'installation 100 et un réseau Internet extérieur à l'installation. L'unité de gestion 102 peut être une unité de commande locale 12 ou centrale 13.

L'actionneur électromécanique 5 est configuré pour exécuter des commandes de déplacement, notamment de déploiement ou de repli, des protections solaires 3, les commandes pouvant être émises, notamment, par l'unité de commande locale 12 ou l'unité de commande centrale 13, qui font partie de l'installation 100.

L'actionneur électromécanique 5 comprend un moteur électrique 10 et une unité électronique de contrôle 15 apte à mettre en fonctionnement le moteur électrique 10 de l'actionneur électromécanique 5, et, en particulier, permettre l'alimentation en énergie électrique du moteur électrique 10.

L'unité électronique de contrôle 15 comprend un module de communication, en particulier de réception d'ordres de commande, les ordres de commande étant émis par l'unité de commande locale 12 ou l'unité de commande centrale 13, par exemple par le biais d'ordres de commande radioélectriques.

Une télécommande 14, pouvant être un type d'unité de commande locale, et pourvue d'un clavier de commande, qui comprend des moyens de sélection et éventuellement d'affichage, permet, en outre, à un utilisateur d'intervenir sur l'actionneur électromécanique 5 et/ou l'unité de commande locale 12 et/ou centrale 13.

L'installation peut également comprendre une station météorologique, non représentée, déportée à l'extérieur du bâtiment, incluant, notamment, un ou plusieurs capteurs pouvant être configurés pour déterminer, par exemple, une température extérieure, une luminosité ou encore une vitesse de vent.

L'actionneur électromécanique 5 peut comprendre une liaison vers une source d'énergie secteur ou peut comprendre un dispositif d'alimentation en énergie électrique autonome, comme par exemple un panneau photovoltaïque et/ou un dispositif de stockage d'énergie électrique. L'installation 100, en particulier l'unité de gestion 102, et l'actionneur électromécanique 5 comprennent tous les moyens matériels et/ou logiciels de mise en œuvre du procédé de gestion objet de l'invention.

L'unité de gestion 102 comprend une unité de traitement agencée pour contenir et exécuter un produit programme d'ordinateur comprenant des portions de code de programme pour l'exécution des étapes d'un procédé de gestion de l'installation domotique 100 selon l'invention. En particulier, l'unité de gestion 102 est apte à déterminer une gestion automatique d'un positionnement de la protection solaire 3 en fonction d'un mode de pilotage $M_{j\alpha}$ préalablement sélectionné. La gestion automatique de la protection solaire 3 comprend notamment des ordres de commande de déploiement, c'est-à-dire d'ouverture, ou de repli, c'est-à-dire de fermeture de la protection solaire transmis de l'unité de gestion 102 à l'actionneur électromécanique 5 conformément au mode de pilotage sélectionné.

L'unité de gestion 102 comprend une mémoire dans laquelle peut être stockée le mode de pilotage $M_{i\alpha(T)}$ à réaliser et un ensemble de programmes associés à différents modes de pilotage $M_{j\alpha(T)}$.

L'unité de gestion 102 est également agencée pour recevoir des données du dispositif de mesure 104 de température intérieure. L'unité de gestion 102 peut également recevoir des données d'état ou de position fournies par l'actionneur électromécanique 5, concernant la protection solaire 3. A ce propos, l'unité de gestion 102 comprend un module de communication.

L'unité de gestion 102 comprend également une interface utilisateur. L'interface utilisateur est agencée pour permettre une programmation éventuelle de l'unité de gestion 102.

L'unité de gestion 102 comprend en outre un élément d'affichage pour fournir une valeur de la température intérieure $t_{int}$ et/ou une référence du mode de pilotage $M_{j\alpha(T)}$ suite à la mise en oeuvre du procédé de gestion 200 décrit plus loin.

L'unité de gestion 102 comprend également des éléments de mesure d'illuminance, par exemple un luxmètre ou des moyens de communication avec de tels éléments de mesure d'illuminance. Le module de communication de l'unité de gestion 102 est également adapté pour recevoir des informations relatives à des prévisions météorologiques, par exemple par le biais d'une connexion à un réseau Internet par le biais de l'unité de commande centrale.

Optionnellement, l'unité de gestion 102 peut être encore plus performante avec l'utilisation de prédictions météorologiques de la température extérieure et du rayonnement solaire sur 24h. Le rayonnement solaire peut être déduit d'une mesure d'illuminance via un luxmètre.

Le procédé de gestion 200 conforme à l'invention est décrit ci-dessous en relation avec la figure 4.

Le procédé de gestion 200 selon l'invention comprend une étape d'initialisation S0 dans laquelle au moins une valeur d'initialisation $\alpha^{init}$ du paramètre de réglage $\alpha$ est déterminée.

Le paramètre de réglage $\alpha$ est une grandeur permettant de modifier le mode de pilotage $M_{i\alpha}$ permettant de piloter la protection solaire 3 de sorte à l'adapter aux conditions météorologiques extérieures. Le paramètre de réglage $\alpha$ permet une adaptation dynamique du mode de pilotage $M_{j\alpha}$ au cours du temps et plus particulièrement au cour de l'année.

Le paramètre de réglage $\alpha$ est modifié en fonction des données d'entrée et donc modifie le comportement de la protection solaire 3 en fonction desdites données d'entrée.

A chaque paramètre de réglage $\alpha$ est associé au moins un mode de pilotage $M_{j\alpha}$.

Selon un mode de réalisation, à chaque paramètre de réglage $\alpha$ est associé une pluralité de mode de pilotage $M_{j\alpha}$.

Selon un mode de réalisation, le paramètre de réglage $\alpha$ est sélectionné parmi un ensemble discret ordonné de paramètre de réglage $\alpha$.

Autrement dit, le paramètre de réglage $\alpha$ ne peut pas prendre n'importe quelle valeur, mais uniquement celles listées. Il y a donc au moins autant de modes de pilotage $M_{j\alpha}$ que de valeurs dans l'ensemble des valeurs du paramètre de réglage $\alpha$. Par exemple, il y a deux modes de pilotage $M_{j\alpha}$ pour chaque valeur du paramètre de réglage $\alpha$. Il existe donc un ensemble discret de mode de pilotage $M_{j\alpha}$ associé.

L'ensemble des valeurs du paramètre de réglage $\alpha$ étant ordonné ou classé, les modes de pilotage $M_{j\alpha}$ associés sont donc également classés ou ordonnés.

Selon une caractéristique, l'ensemble discret ordonné de paramètre de réglage $\alpha$ comprend entre 1 et n valeurs, par exemple entre 1 et 6 valeurs, de préférence entre 1 et 3 valeurs.

Le nombre de valeur du paramètre de réglage $\alpha$ et donc le nombre de mode de pilotage $M_{j\alpha}$ diffère assez largement d'un nombre de saisons de sorte qu'un ajustement plus fin peut avoir lieu entre des modes de pilotage $M_{j\alpha}$ extrêmes.

Selon un mode de réalisation, le paramètre de réglage $\alpha$ est un entier positif.

Selon un mode de réalisation, le paramètre de réglage $\alpha$ varie uniformément sur l'ensemble discret de valeurs du paramètre de réglage $\alpha$.

Selon un mode de réalisation, les valeurs de l'ensemble discret de valeurs du paramètre de réglage $\alpha$ sont ordonnées de manière croissante.

De manière alternative, les valeurs de l'ensemble discret de valeurs du paramètre de réglage $\alpha$ sont ordonnées de manière décroissante.

Ainsi, le paramètre de réglage $\alpha$ varie entre deux valeurs extrêmes.

Par exemple, un des modes de pilotage $M_{j\alpha}$ extrêmes, par la suite appelé mode Hiver, correspond à un mode dans lequel on favorise au maximum les apports solaires pour chauffer l'intérieur du bâtiment 1 par un positionnement approprié de la protection solaire 3, majoritairement replié ou relevé. Dans l'autre mode de pilotage $M_{j\alpha}$ extrême, par la suite appelé mode Eté, on inhibe au maximum les apports solaires, par un positionnement approprié de la protection solaire 3, majoritairement déroulé ou déployé. Les modes de pilotage $M_{j\alpha}$ intermédiaires présentent des pondérations dégressives entre ces deux modes extrêmes. Selon un mode de réalisation, la valeur d'initialisation $\alpha^{init}$ du paramètre de réglage $\alpha$ correspond à un minimum du paramètre de réglage $\alpha$. De manière alternative, la valeur d'initialisation $\alpha^{init}$ du paramètre de réglage $\alpha$ correspond à un maximum du paramètre de réglage $\alpha$. De manière alternative, la valeur d'initialisation $\alpha^{init}$ du paramètre de réglage correspond à une valeur moyenne ou médiane entre le minimum et le maximum du paramètre de réglage $\alpha$. La valeur d'initialisation $\alpha^{init}$ du paramètre de réglage $\alpha$ peut également être arbitraire entre le minimum et le maximum du paramètre de réglage $\alpha$ et saisie par un installateur ou un utilisateur.

Selon un mode de réalisation, la valeur d'initialisation $\alpha^{init}$ du paramètre de réglage $\alpha$ est déterminée en fonction d'une date calendaire de l'initialisation.

Dans certains modes de réalisation, le procédé comprend une étape de définition S0' dans laquelle un paramètre de préférence thermo-lumineux j est déterminé par un utilisateur.

Le paramètre de préférence thermo-lumineux j correspond à un paramètre permettant à l'utilisateur d'indiquer s'il souhaite favoriser un confort lumineux ou prioriser un confort thermique dans le mode de pilotage $M_{j\alpha}$ de la protection solaire 3.

Suite à l'étape de définition S0' par l'utilisateur, le paramètre de préférence thermo-lumineux j est fixe sur une première période de temps de pilotage T1 et sur une deuxième période de temps de pilotage T2. Autrement dit, tant que l'étape de définition S0' n'est pas refaite, le paramètre de préférence thermo-lumineux j est fixe dans le procédé 200.

Dans certains modes de réalisation, le paramètre de préférence thermo-lumineux j est sélectionné dans un ensemble discret ordonné de valeurs du paramètre de préférence thermo-lumineux j.

Selon une caractéristique, l'ensemble discret ordonné de paramètre de préférence thermo-lumineux j comprend entre 1 et m valeurs, par exemple entre 1 et 10 valeurs, de préférence entre 1 et 5 valeurs.

Selon un mode de réalisation, le paramètre de préférence thermo-lumineux j est un entier positif. Dans certains modes de réalisation, le mode de pilotage $M_{j\alpha}$ est fonction du paramètre de préférence thermo-lumineux j.

Le mode de pilotage $M_{j\alpha}$ est donc dépendant du paramètre de réglage $\alpha$ et du paramètre de préférence thermo-lumineux j. Ainsi, il existe autant de mode de pilotage $M_{j\alpha}$ qu'il y a de nombre de valeur de paramètre de réglage $\alpha$ multiplié par le nombre de valeur du paramètre de préférence thermo-lumineux j.

Le mode de pilotage $M_{j\alpha}$ définit un comportement, c'est-à-dire par exemple un taux de fermeture R, de la protection solaire 3 en fonction de différentes données d'entrée, comme par exemple une valeur de la luminosité E et/ou une température intérieure $t_{int}$.

Concrètement, avec les exemples ci-dessus, une mesure de luminosité E importante pourra entrainer :

- une fermeture de la protection solaire 3 si le mode de pilotage $M_{j\alpha}$ cherche à limiter une hausse de la température intérieure $t_{int}$, ou
- entrainer un taux de fermeture R de la protection solaire 3 de 50% uniquement si la température intérieure $t_{int}$ dépasse un seuil de température donnée.

Dans certains modes de réalisation, le mode de pilotage $M_{j\alpha}$ comprend au moins un ratio de fermeture R de la protection solaire 3 motorisée, en fonction d'une comparaison de la température intérieure $t_{int}$ à une température d'actionnement minimale $t^j_{min}$, et une température d'actionnement maximale $t^j_{max}$.

Autrement dit, chaque mode de pilotage $M_{j\alpha}$ fait varier le ratio de fermeture R de l'au moins une protection solaire 3 suivant si un critère de comparaison de la température intérieure $t_{min}$ par rapport à la température d'actionnement minimale $t^j_{min}$ et la température d'actionnement maximale $t^j_{max}$ est validé.

Le ratio de fermeture R correspond à une position intermédiaire comprise entre la position repliée ou enroulée et la position déployée ou déroulée. Lorsque le ratio de fermeture R est égal à 1, la position intermédiaire est confondue avec la position déployée ou déroulée. Lorsque le ratio de fermeture R est égal à 0, la position intermédiaire est confondue avec la position repliée ou enroulée.

Dans certains modes de réalisation, au moins le ratio de fermeture R, et/ou la température d'actionnement minimale $t^j_{min}$, et/ou la température d'actionnement maximale $t^j_{max}$ sont déterminés en fonction du paramètre de réglage $\alpha$.

Dans certains modes de réalisation, au moins le ratio de fermeture R, et/ou la température d'actionnement minimale $t^j_{min}$, et/ou la température d'actionnement maximale $t^j_{max}$ sont déterminés en fonction du paramètre de préférence thermo-lumineux j.

Ainsi, le ratio de fermeture R, et/ou la température d'actionnement minimale $t^j_{min}$, et/ou la température d'actionnement maximale $t^j_{max}$ sont différents pour chaque mode de pilotage $M_{j\alpha}$. Par exemple, le mode de pilotage $M_{j\alpha}$ peut être déterminé par le tableau ci-dessous, pour un paramètre de préférence thermo-lumineux j donné et pour un paramètre de réglage $\alpha$ donné,:

[Tab 1]

| E < E_night | E_min ≥ E ≥ E_day | | E ≥ E_max | |
|---|---|---|---|---|
| R = $R^j_{night}$ | $t_{int} < t^j_{min}$ | $t_{int} ≥ t^j_{max}$ | $t_{int} < t^j_{min}$ | $t_{int} ≥ t^j_{max}$ |
| | R = $R^j_{min1}$ | R = $R^j_{max1}$ | R = $R^j_{min2}$ | R = $R^j_{max2}$ |
| Avec: E : la luminosité mesurée<br>$E_{night}$, $E_{min}$, $E_{day}$, $E_{max}$: des valeurs de seuil de la luminosité<br>R : le ratio de fermeture appliquée par le mode de pilotage $M_{j\alpha}$<br>$R^j_{night}$, $R^j_{min1}$, $R^j_{max1}$, $R^j_{min2}$, $R^j_{max2}$: des valeurs du ratio de fermeture<br>$t_{int}$: la température intérieure mesurée<br>$t^j_{min}$, $t^j_{max}$: des valeurs de seuil de la température d'actionnement minimale et de la température d'actionnement maximale | | | | |

Les valeurs de seuil de la température d'actionnement minimale $t^j_{min}$, et la température d'actionnement maximale $t^j_{max}$ étant, par exemple, définies par les formules suivantes :

[Math 1]

$$t^j_{min}(\alpha) = \frac{\alpha - 1}{n - 1} t^j_{min,summer} + \frac{n - \alpha}{n - 1} t^j_{min,winter}$$

[Math 2]

$$t^j_{max}(\alpha) = \frac{\alpha - 1}{n - 1} t^j_{max,summer} + \frac{n - \alpha}{n - 1} t^j_{max,winter}$$

Avec:

$\alpha$ : le paramètre de réglage

n : le nombre de valeur de l'ensemble discret ordonné de manière croissante de paramètre de réglage $\alpha$

$t^j_{min}$, $t^j_{max}$: les valeurs de seuil de la température d'actionnement minimale et de la température d'actionnement maximale

$t^j_{min, summer}$, $t^j_{max, summer}$, $t^j_{min, winter}$, $t^j_{max, winter}$ : des valeurs de température intérieure déterminées.

Ci-dessous, les tableaux des paramètres de certains modes de pilotages $M_{j\alpha}$ sont reproduit en fonction paramètre de préférence thermo-lumineux j et du paramètre de réglage $\alpha$ :

Pour $\alpha$ = 1, correspondant au mode Hiver
Et j=1, correspondant à un indice favorisant le confort lumineux,
C'est-à-dire pour le mode de pilotage $M_{11}$ :

[Tab 2]

| E < E_night | E_min ≥ E ≥ E_day | | E ≥ E_max | |
|---|---|---|---|---|
| R=1 | $t_{int} < 27°C$ | $t_{int} ≥ 29°C$ | $t_{int} < 27°C$ | $t_{int} ≥ 29°C$ |
| | R = 0 | R = 0 | R = 0 | R = 40 |

Avec ces paramètres, lorsque le mode de pilotage $M_{11}$ est appliqué, la protection solaire est fermée (R=1) lorsque la luminosité E est inférieure au seuil $E_{nignt}$, autrement dit, la nuit. En effet, fermer la protection solaire la nuit contribue à limiter des déperditions thermiques. Dès que la luminosité devient supérieure au seuil $E_{min}$, c'est-à-dire dès qu'il fait jour, la protection solaire est ouverte (R=0) sauf lorsque la température intérieure $t_{int}$ devient supérieure à 29°C. dans ce dernier cas, la protection solaire 3 est fermée à 40% de manière à limiter une température intérieure $t_{int}$ excessive.

Pour $\alpha$ = 1, correspondant au mode Hiver

Et j=2, correspondant à un indice favorisant un peu moins le confort lumineux par rapport au confort thermique que pour j = 1 :

C'est-à-dire pour le mode de pilotage $M_{21}$ :

[Tab 3]

| E < $E_{night}$ | $E_{min} \geq E \geq E_{day}$ | | $E \geq E_{max}$ | |
|---|---|---|---|---|
| R = 1 | $t_{int}$ < 26.5°C | $t_{int} \geq$ 28.5°C | $t_{int}$ < 26.5°C | $t_{int} \geq$ 28.5°C |
| | R = 0 | R = 0 | R = 0 | R = 50 |

Avec ces paramètres, comme pour $\alpha$ = 1, et j = 2, lorsque le mode de pilotage $M_{21}$ est appliqué, la protection solaire est fermée (R=1) lorsque la luminosité E est inférieure au seuil $E_{night}$. Dès que la luminosité devient supérieure au seuil $E_{min}$, la protection solaire est ouverte (R=0) sauf lorsque la température intérieure $t_{int}$ devient supérieure à 28,5°C. dans ce dernier cas, la protection solaire 3 est fermée à 50% de manière à limiter une température intérieure $t_{int}$ excessive. Ce mode de pilotage $M_{21}$ permet de fermer la protection solaire 3 dès l'atteinte de la température de 28.5°C.

Pour $\alpha$ = 1, correspondant au mode Hiver

Et j=3, correspondant à un indice favorisant un peu moins le confort lumineux par rapport au confort thermique que pour j = 3 :

C'est-à-dire pour le mode de pilotage $M_{31}$ :

[Tab 4]

| E < $E_{night}$ | $E_{min} \geq E \geq E_{day}$ | | $E \geq E_{max}$ | |
|---|---|---|---|---|
| R = 1 | $t_{int}$ < 26°C | $t_{int} \geq$ 28°C | $t_{int}$ < 26°C | $t_{int} \geq$ 28°C |
| | R = 0 | R = 0 | R = 0 | R = 60 |

Le mode de pilotage $M_{31}$ diffère du mode de pilotage $M_{21}$ en ce la protection solaire 3 est fermée à 60% lorsque la température intérieure $t_{int}$ atteint 28°C. Ce mode de pilotage $M_{31}$ ferme donc plus rapidement la protection solaire 3, dès l'atteinte de la température de 28°C, et de manière plus importante 60% au lieu de 50%, par rapport au mode de pilotage $M_{21}$.

Pour $\alpha$ = 3, correspondant au mode Été

Et j=1, correspondant à un indice favorisant le confort lumineux,
C'est-à-dire pour le mode de pilotage $M_{13}$ :

[Tab 5]

| E < $E_{night}$ | $E_{min} \geq E \geq E_{day}$ | | $E \geq E_{max}$ | |
|---|---|---|---|---|
| R = 0 | $t_{int}$ < 26°C | $t_{int} \geq$ 28°C | $t_{int}$ < 26°C | $t_{int} \geq$ 28°C |
| | R = 0 | R = 0 | R= 40 | R= 60 |

Avec ces paramètres, lorsque le mode de pilotage $M_{13}$ est appliqué, la protection solaire est ouverte (R=0) lorsque la luminosité E est inférieure au seuil $E_{nignt}$, autrement dit, la nuit. En effet, ouvrir la protection solaire la nuit contribue à améliorer un refroidissement de l'intérieur du batiment 1. Dès que la luminosité devient supérieure au seuil $E_{max}$, c'est-à-dire dès qu'il fait très soleil, la protection solaire est fermée à 40% ou à 60% en fonction de la température intérieure $t_{int}$ de manière à limiter une température intérieure excessive.

Pour $\alpha$ = 2, correspondant au mode Intermédiaire

Et j=1, correspondant à un indice favorisant le confort lumineux,

C'est-à-dire pour le mode de pilotage $M_{12}$ :

[Tab 6]

| E < $E_{night}$ | $E_{min} \geq E \geq E_{day}$ | | $E \geq E_{max}$ | |
|---|---|---|---|---|
| R = 0,5 | $t_{int} < 26,5°C$ | $t_{int} \geq 28,5°C$ | $t_{int} < 26,5°C$ | $t_{int} \geq 28,5°C$ |
| | R = 0 | R = 0 | R= 20 | R = 50 |

Avec ces paramètres, lorsque le mode de pilotage $M_{12}$ est appliqué, la protection solaire est entre-ouverte (R=0,5) lorsque la luminosité E est inférieure au seuil $E_{nignt}$, autrement dit, la nuit. Dès que la luminosité devient supérieure au seuil $E_{max}$, c'est-à-dire dès qu'il fait très soleil, la protection solaire est fermée à 20% ou à 50% en fonction de la température intérieure $t_{int}$ de manière à limiter une température intérieure excessive.

Un tableau comme ceux-ci-dessus peut être indiquer pour chaque couple du paramètre de préférence thermo-lumineux j et du paramètre de réglage $\alpha$.

Le procédé selon l'invention détermine quel mode de pilotage $M_{j\alpha}$ est appliqué sur quelle période de temps. Pour cela, le procédé comprend une étape de pilotage S1. Lors de l'étape de pilotage S1, la position de la protection solaire 3 est déterminée, sur une première période de temps de pilotage T1 en fonction d'un premier mode de pilotage $M_{j\alpha(T1)}$ prenant en compte au moins une première valeur $\alpha^{(T1)}$ du paramètre de réglage $\alpha$.

L'étape de pilotage S1 a pour objet de piloter, c'est-à-dire modifier la position, de la protection solaire 3 au cours d'une période de temps de pilotage T en fonction d'un mode de pilotage $M_{j\alpha}$, et plus particulièrement au cours d'une première période de temps de pilotage T1 en fonction d'un premier mode de pilotage $M_{j\alpha(T1)}$.

En effet, selon des conditions météorologiques extérieures un utilisateur ne souhaite pas avoir le même comportement de la protection solaire 3 pour une même donnée d'entrée. Dans l'hémisphère nord, pendant la saison de l'hiver, un utilisateur souhaite favoriser la luminosité, tandis que pendant la saison de l'été, l'utilisateur souhaite diminuer la luminosité afin de limiter une augmentation de la température intérieure $t_{int}$.

Selon un mode de réalisation, la première période de temps de pilotage T1 est égale à 24h.

Le procédé comprend également une étape de mesure S2 de la température intérieure $t_{int}$ du bâtiment 1 pendant une période de temps de mesure T1'a, T'1b, T'1c.

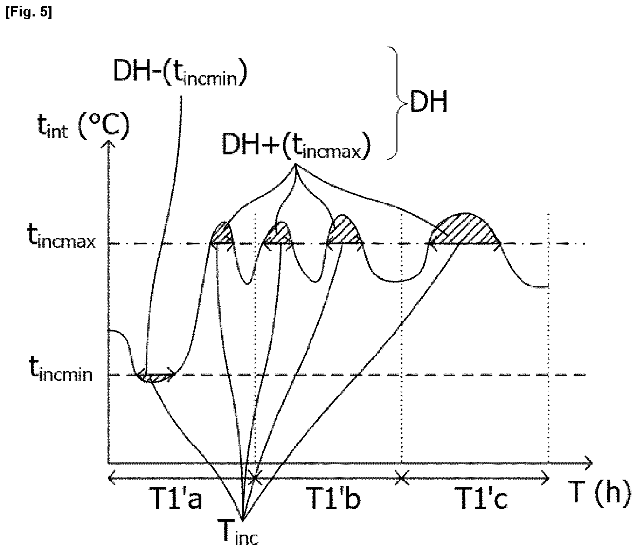

La figure 5 illustre un graphique de la température intérieure $t_{int}$ mesurée au cours du temps T, et plus particulièrement sur trois périodes de temps de mesure T1'a, T'1b, T'1c.

L'étape de mesure S2 enregistre pendant la période de temps de mesure T1'a, T'1b, T'1c, la température intérieure $t_{int}$ du bâtiment 1 donnée par l'au moins un capteur de température. La période de temps de mesure T1'a, T'1b, T'1c est donc inférieure, égale, ou supérieure à la première période de temps de pilotage T1.

Plus la période de temps de mesure T1'a, T'1b, T'1c est longue par rapport à la première période de temps de pilotage T1, plus un changement de mode de pilotage $M_{j\alpha}$ entre la première T1 et une deuxième T2 période de temps de pilotage présente de l'inertie, c'est-à-dire que le comportement de la protection solaire 3 varie peu entre la première période de temps de pilotage T1 et la deuxième période de temps de pilotage T2. A l'inverse, plus la période de temps de mesure T1'a, T'1b, T'1c est courte par rapport à la première période de temps de pilotage T1, plus le changement de mode de pilotage $M_{j\alpha}$ présente des changements importants.

Selon un mode de réalisation, la période de temps de mesure T1'a, T'1b, T'1c est au moins égale à la première période T1 ou la deuxième période T2 de temps de pilotage. Dans ce cas, la figure 5 représente trois périodes de temps de pilotage.

Le procédé comprend ensuite une première étape de détermination S3 dans laquelle au moins une période d'inconfort $T_{inc}$ est déterminée en fonction d'un critère de comparaison entre la température intérieure $t_{int}$ du bâtiment 1 et au moins une température d'inconfort $t_{incmax}$, $t_{incmin}$. L'au moins une période d'inconfort $T_{inc}$ est une période inférieure ou égale à la période de temps de mesure T1'a, T1'b, T'1c. La période d'inconfort $T_{inc}$ est déterminée en fonction d'un critère de comparaison entre la température intérieure $t_{int}$ du bâtiment 1 qui a été mesurée sur la période de temps de mesure T1'a, T1'b, T'1c et l'au moins une température d'inconfort $t_{incmax}$, $t_{incmin}$.

La température d'inconfort $t_{incmax}$, $t_{incmin}$ est une donnée fixe ou variable en fonction du premier mode de pilotage $M_{j\alpha(T1)}$.

On peut considérer une température d'inconfort maximum $t_{incmax}$ qui représente un seuil haut au-delà duquel l'utilisateur considère que la température intérieure $t_{int}$ du bâtiment est trop élevée, c'est-à-dire qu'il fait trop chaud.

Selon un mode de réalisation, la période d'inconfort $T_{inc}$ est égale à la période pendant laquelle la température intérieure $t_{inc}$ du bâtiment 1 est supérieure la température d'inconfort maximum $t_{incmax}$.

On peut considérer une température d'inconfort minimum $t_{incmin}$ qui représente un seuil bas au-delà duquel l'utilisateur considère que la température intérieure $t_{int}$ du bâtiment est trop basse, c'est-à-dire qu'il fait trop froid.

Selon un mode de réalisation, la période d'inconfort $T_{inc}$ est égale à la période pendant laquelle la température intérieure $t_{inc}$ du bâtiment 1est inférieure à la température d'inconfort minimum $t_{incmin}$.

La température d'inconfort $t_{incmax}$, $t_{incmin}$ est donc un seuil de comparaison de la température intérieure $t_{int}$ permettant de déterminer la période d'inconfort $T_{inc}$.

Comme illustrée en figure 5, la période de temps de mesure T1'a, T1'b, T1'c peut comprendre une ou une pluralité de période d'inconfort $T_{inc}$. Chaque période d'inconfort $T_{inc}$ est séparée d'une autre période d'inconfort $T_{inc}$ par une période de confort. Une période de confort correspond à une période de la période de temps de mesure T1'a, T1'b, T1'c pendant laquelle le critère de comparaison entre la température intérieure $t_{int}$ du bâtiment 1 et l'au moins une température d'inconfort $t_{incmax}$, $t_{incmin}$ n'est pas validée. Il y a donc une période de confort entre deux périodes d'inconfort $T_{inc}$.

La période d'inconfort $T_{inc}$ est une somme des instants pour lesquelles le critère de comparaison est rempli.

Dans certains modes de réalisation, l'au moins une température d'inconfort $t_{incmax}$, $t_{incmin}$ est déterminée en fonction de la température d'actionnement minimale $t^j_{min}$. Préférentiellement, la température d'inconfort maximale $t_{incmax}$ est déterminée en fonction de la température d'actionnement minimale $t^j_{min}$. Par exemple, la température d'inconfort maximale $t_{incmax}$ est égale à la température d'actionnement minimale $t^j_{min}$.

Ensuite, le procédé comprend une deuxième étape de détermination S4 dans laquelle au moins un indicateur d'inconfort DH est déterminé au moins en fonction d'un cumul temporel d'un écart entre la température intérieure $t_{int}$ du bâtiment 1 et la température d'inconfort $t_{incmax}$, $t_{incmin}$, sur l'au moins une période d'inconfort $T_{inc}$.

L'indicateur d'inconfort DH s'exprime en degrés.heures. L'indicateur d'inconfort DH dépend de la température d'inconfort $t_{incmin}$, $t_{incmax}$ mais également de la période d'inconfort $T_{inc}$. L'écart entre la température intérieure $t_{int}$ et la température d'inconfort $t_{incmin}$, $t_{incmax}$ est l'écart au-dessus ou en dessous de la température d'inconfort $t_{incmin}$, $t_{incmax}$, selon si la température d'inconfort $t_{incmin}$, $t_{incmax}$ est une température d'inconfort maximum $t_{incmax}$ ou minimum $t_{incmin}$.

L'indicateur d'inconfort DH+($t_{incmax}$), DH-($t_{incmin}$) représente les degrés.heures passés au-dessus, ou en dessous, de la température d'inconfort $t_{incmin}$, $t_{incmax}$. L'indicateur d'inconfort est donc un indicateur d'inconfort chaud DH+($t_{incmax}$) s'il se base sur la température d'inconfort maximum $t_{incmax}$. Dans ce cas, l'indicateur DH+($t_{incmax}$) est déterminé au moins en fonction du cumul temporel des dépassements de la température intérieure $t_{int}$ au-dessus de la température d'inconfort maximum $t_{incmax}$. L'indicateur d'inconfort est donc un indicateur d'inconfort froid DH-($t_{incmin}$) s'il se base sur une température d'inconfort minimum $t_{incmin}$. Dans ce cas, l'indicateur DH-($t_{incmin}$) est déterminé au moins en fonction du cumul temporel des déficits de la température intérieure $t_{int}$ en-dessous de la température d'inconfort minimum $t_{incmin}$.

Plus l'indicateur d'inconfort chaud DH+($t_{incmax}$), ou froid DH-($t_{incmin}$) est important, plus le temps d'inconfort $T_{inc}$ et/ou l'écart entre la température intérieure $t_{int}$ du bâtiment 1 et la température d'inconfort $t_{incmin}$, $t_{incmax}$ a été important.

Le cumul temporel de l'écart entre la température intérieure $t_{int}$ du bâtiment 1 et la température d'inconfort $t_{incmin}$, $t_{incmax}$ sur la période d'inconfort $T_{inc}$ correspond également à l'intégrale temporelle de l'écart, au-dessus, ou en-dessous, de la température intérieure $t_{int}$ du bâtiment 1 par rapport à la température d'inconfort $t_{incmin}$, $t_{incmax}$, sur la période d'inconfort $T_{inc}$.

Selon un mode de réalisation, un indicateur d'inconfort chaud total DH+($t_{incmax}$)$_{tot}$, est déterminé au moins en fonction d'un cumul des indicateurs d'inconfort chaud DH+($t_{incmax}$) détectés sur la période de temps de mesure T1'a, T'1b, T1'c.

Selon un mode de réalisation, un indicateur d'inconfort froid total DH-($t_{incmin}$)$_{tot}$ est déterminé au moins en fonction d'un cumul des indicateurs d'inconfort froid DH-($t_{incmin}$) détectés sur la période de temps de mesure T1'a, T'1b, T1'c.

Le procédé comprend ensuite une étape d'évaluation d'une deuxième S5 valeur $\alpha^{T2}$ du paramètre de réglage $\alpha$ dans laquelle la deuxième valeur $\alpha^{T2}$ du paramètre de réglage $\alpha$ est déterminée en fonction d'une comparaison entre l'au moins un indicateur d'inconfort DH+($t_{incmax}$), DH-($t_{incmin}$) ou l'au moins un indicateur d'inconfort chaud/froid total DH+($t_{incmax}$)$_{tot}$, DH-($t_{incmin}$)$_{tot}$ et un critère d'évaluation.

Le critère d'évaluation correspond à un seuil de comparaison pour l'indicateur d'inconfort DH+($t_{incmax}$), DH-($t_{incmin}$) ou l'au moins un indicateur d'inconfort chaud/froid total DH+($t_{incmax}$)$_{tot}$, DH-($t_{incmin}$)$_{tot}$.

Le critère d'évaluation peut dépendre de la période de temps de mesure T1'a, T1'b, T1'c. Dans certains modes de réalisation, le critère d'évaluation s'exprime en degrés.heures.

Selon un mode de réalisation, la deuxième valeur $\alpha^{T2}$ du paramètre de réglage $\alpha$ est modifiée en fonction de la première valeur $\alpha^{T1}$ du paramètre de réglage $\alpha$ et d'une valeur de décalage k.

La valeur de décalage k correspond à la différence ou au nombre d'intervalle entre deux valeurs de l'ensemble discret de valeurs du paramètre de réglage $\alpha$. La valeur de décalage k détermine la nouvelle valeur du paramètre de réglage $\alpha$, et donc le nouveau mode de pilotage $M_{j\alpha}$.

Selon un mode de réalisation, la valeur de décalage k correspond à un nombre entier.

Selon un mode de réalisation, la valeur de décalage k correspond à un décalage compris entre un intervalle et cinq intervalles, et de préférence entre un intervalle et trois intervalles dans l'ensemble discret ordonné de valeurs du paramètre de réglage $\alpha$.

Ainsi, le paramètre de réglage $\alpha$ ou le mode de pilotage $M_{j\alpha}$, s'adapte plus rapidement aux changements climatiques.

La valeur de décalage k indique un glissement sur l'ensemble discret de valeurs du paramètre de réglage $\alpha$ vers la nouvelle valeur du paramètre de réglage $\alpha$, et donc le nouveau mode de pilotage $M_{j\alpha}$.

La deuxième valeur $\alpha^{T2}$ du paramètre de réglage $\alpha$ est donc dépendante de la première valeur $\alpha^{T1}$ du paramètre de réglage $\alpha$.

La deuxième valeur $\alpha^{T2}$ du paramètre de réglage $\alpha$ est donc déterminée par un ajustement de la première valeur $\alpha^{T1}$ du paramètre de réglage $\alpha$.

Le nouveau mode de pilotage $M_{j\alpha}$ est déterminé, par glissement sur la liste des modes vers l'un des modes extrêmes. Une inertie du glissement, déterminé notamment par la valeur de la valeur de décalage k, permet à la fois de prendre en compte des changements de température extérieure d'un jour à l'autre et des changements de température extérieure à plus large échelle de temps.

Ainsi, une valeur de décalage k de deux intervalles modifie deux fois plus le paramètre de réglage $\alpha$ qu'une valeur de décalage k d'un intervalle.

Un premier exemple de détermination de la deuxième valeur $\alpha^{T2}$ du paramètre de réglage $\alpha$ est décrit ci-dessous :

[Math 3]

$$If\ (DH + (t_{incmax} - 1)_{tot} < DH_1)\ OR\ (DH - (t_{incmin})_{tot} > DH_2) => \alpha^{T2} = \max(1, \quad \alpha^{T1} - k)$$

[Math 4]

$$If\ (DH + (t_{incmax})_{tot} > DH_3) => \alpha^{T2} = min(n, \quad \alpha^{T1} + k)$$

Avec :

$DH+(t_{incmax}\text{-}1)_{tot}$ : l'indicateur d'inconfort chaud total par rapport à la température d'inconfort $t_{incmax}$ moins un degré
$DH-(t_{incmin})_{tot}$ : l'indicateur d'inconfort froid total
$DH+(t_{incmax})_{tot}$ : l'indicateur d'inconfort chaud total
$\alpha^{T1}$ , $\alpha^{T2}$: la première et la deuxième valeur du paramètre de réglage
k : la valeur de décalage
$DH_1$, $DH_2$, $DH_3$: critères d'évaluation. Par exemple $DH_1 = DH_2 = DH_3 = 5°C.h$.
n : le nombre de valeur de l'ensemble des valeurs de paramètre de réglage.

Dans certains modes de réalisation, la deuxième valeur $\alpha^{T2}$ du paramètre de réglage $\alpha$ est déterminée en fonction d'un quotient arrondi à l'entier inférieur m de l'indicateur d'inconfort DH par le critère d'évaluation, sur la période de temps de mesure T1'a, T1'b, T1'c.

Autrement dit, le quotient, arrondi à l'entier inférieur, m d'une division de l'indicateur d'inconfort DH par le critère d'évaluation est déterminé. Ensuite la deuxième valeur $\alpha^{T2}$ du paramètre de réglage $\alpha$ est déterminée en fonction de ce quotient m.

Dans certains modes de réalisation, la valeur de décalage k dépend du quotient m, par exemple est égale au quotient m.

Dans certains modes de réalisation, la deuxième valeur $\alpha^{T2}$ du paramètre de réglage $\alpha$ est déterminée en fonction du quotient m arrondi à l'entier inférieur de l'indicateur d'inconfort chaud ou froid total $DH+(t_{incmax})_{tot}$, $DH-(t_{incmin})_{tot}$ par le critère d'évaluation $DH_1$, $DH_2$, $DH_3$.

Un deuxième exemple de détermination de la deuxième valeur $\alpha^{T2}$ du paramètre de réglage $\alpha$ est décrit ci-dessous :

[Math 5]

$$If\ (DH - (t_{incmin})_{tot} > m\ \ (DH_2)) => \alpha^{T2} = \max(1, \quad \alpha^{T1} - k)$$

[Math 6]

$$Else\ if\ (DH + (t_{incmax} - 1)_{tot} < DH_1) => \alpha^{T2} = max(1, \quad \alpha^{T1} - 1)$$

[Math 7]

$$If \ (DH + (t_{incmax})_{tot} > \qquad m(DH_3)) => \alpha^{T2} = \min(n, \qquad \alpha^{T1} + k)$$

Avec :

DH-$(t_{incmin})_{tot}$: l'indicateur d'inconfort froid total

m(DH$_2$), m(DH$_3$) : le quotient arrondi à l'entier inférieur multiplié par le critère d'évaluation

DH+$(t_{incmax}$-1$)_{tot}$ : l'indicateur d'inconfort chaud total en prenant en compte la température d'inconfort maximum $t_{incmax}$ moins un degré.

DH+$(t_{incmax})_{tot}$ : l'indicateur d'inconfort chaud total

$\alpha^{T1}$ , $\alpha^{T2}$: la première et la deuxième valeur du paramètre de réglage

k : la valeur de décalage

DH$_1$, DH$_2$, DH$_3$: critères d'évaluation. Par exemple DH$_1$ = DH$_2$ = DH$_3$ = 5°C.h.

n : le nombre de valeur de l'ensemble des valeurs de paramètre de réglage.

Enfin, le procédé comprend une étape d'ajustement S6 dans laquelle un deuxième mode de pilotage M$_{j\alpha(T2)}$ pour une deuxième période de temps de pilotage T2, successive à la première période de temps de pilotage T1, est déterminé en prenant en compte l'au moins une deuxième valeur $\alpha^{T2}$ du paramètre de réglage $\alpha$.

L'étape d'ajustement S6 détermine le mode de pilotage M$_{j\alpha}$ qui sera mis en œuvre sur une deuxième période de temps de pilotage T2 en prenant en compte la nouvelle valeur du paramètre de réglage $\alpha$.

Selon un mode de réalisation, la deuxième période de temps de pilotage T2 est égale à 24h.

Selon un mode de réalisation, une étape de pilotage S1 sur la deuxième période de temps de pilotage T2 intervient à partir de la fin de la première période de temps de pilotage T1. Autrement dit, le procédé revient à l'étape de pilotage pour laquelle la première période de temps de pilotage T1 est devenue la deuxième période de temps de pilotage T2.

Ainsi un mode de pilotage M$_{j\alpha}$ est déterminé pour une période de temps de pilotage complète et on évite tout ajustement intempestif qui interviendrait pendant la période.

Selon l'invention, le paramètre de réglage $\alpha$ est réévalué pour la deuxième période de temps de pilotage T2 en fonction des variations de la température intérieure t$_{int}$, notamment des variations constatées sur la période de temps de mesure T1'a, T1'b, T1'c.

Le procédé selon l"invention a ainsi pour effet d'ajuster, à chaque période de temps de pilotage, la valeur du paramètre de réglage $\alpha$, et donc le mode de pilotage M$_{j\alpha}$, pour s'adapter aux conditions intérieures mesurées sur au moins une partie de la période de temps précédent la deuxième période de temps de pilotage T2. Le mode de pilotage M$_{j\alpha}$ ne correspond pas ainsi à une saison, mais varie avec le paramètre de réglage $\alpha$ lorsque la température intérieure t$_{int}$ s'écarte de la température d'inconfort t$_{incmax}$, t$_{incmin}$ établie pour l'installation. L'ajustement du paramètre de réglage $\alpha$ permet de s'adapter aux changements climatiques entre saisons mais également d'un jour à l'autre à l'intérieur d'une même saison.

Bien entendu, l'invention n'est pas limitée aux modes de réalisation décrits et représentés aux figures annexées. Des modifications restent possibles, notamment du point de vue de la constitution des divers éléments ou par substitution d'équivalents techniques, sans sortir pour autant du domaine de protection de l'invention.

**Revendications**

**1.** Procédé de gestion (200) d'une installation domotique (100) d'un bâtiment (1) comprenant au moins une protection solaire (3) motorisée, une unité de gestion (102) d'une position prise par la protection solaire (3) au cours du temps, et au moins un dispositif de mesure (104) d'une température intérieure (t$_{int}$) du bâtiment (1), le procédé étant mis en œuvre par l'unité de gestion (102) et comprenant :

    - une étape de pilotage (S1) sur une première période de temps de pilotage (T1) dans laquelle la position de la protection solaire (3) est déterminée en fonction d'un premier mode de pilotage (M$_{j\alpha (T1)}$) prenant en compte au moins une première valeur ($\alpha^{T1}$) d'un paramètre de réglage ($\alpha$);

    - une étape de mesure (S2) de la température intérieure (t$_{int}$) du bâtiment (1) pendant une période de temps de mesure (T1'a, T1'b, T1'c) ;

    - une première étape de détermination (S3) dans laquelle au moins une période d'inconfort (T$_{inc}$) est déterminée en fonction d'un critère de comparaison entre la température intérieure (t$_{int}$) du bâtiment (1) et au moins une température d'inconfort (t$_{incmax}$, t$_{incmin}$) ;

    - une deuxième étape de détermination (S4) dans laquelle au moins un indicateur d'inconfort (DH, DH+(t$_{incmax}$),

DH-($t_{incmin}$)) est déterminé au moins en fonction d'un cumul temporel d'un écart entre la température intérieure ($t_{int}$) du bâtiment (1) et la température d'inconfort ($t_{incmax}$, $t_{incmin}$), sur l'au moins une période d'inconfort ($T_{inc}$) ;

- une étape d'évaluation (S5) d'une deuxième valeur ($\alpha^{T2}$) du paramètre de réglage ($\alpha$) dans laquelle la deuxième valeur ($\alpha^{T2}$) du paramètre de réglage ($\alpha$) est déterminée en fonction d'une comparaison entre l'au moins un indicateur d'inconfort (DH, DH+($t_{incmax}$), DH-($t_{incmin}$)) et un critère d'évaluation ($DH_1$, $DH_2$, $DH_3$) ;

- une étape d'ajustement (S6) dans laquelle un deuxième mode de pilotage ($M_{J\alpha(T2)}$) pour une deuxième période de temps de pilotage (T2) successive à la première période de temps de pilotage (T1) est déterminé en prenant en compte l'au moins une deuxième valeur ($\alpha^{JT2}$) du paramètre de réglage ($\alpha$).

2. Procédé (200) selon la revendication 1, dans lequel la deuxième valeur ($\alpha^{T2}$) du paramètre de réglage ($\alpha$) est modifiée en fonction de la première valeur ($\alpha^{T1}$) du paramètre de réglage ($\alpha$) et d'une valeur de décalage (k).

3. Procédé (200) selon l'une quelconque des revendications précédentes, dans lequel le critère d'évaluation ($DH_1$, $DH_2$, $DH_3$) s'exprime en degrés.heures.

4. Procédé (200) selon l'une quelconque des revendications précédentes, dans lequel la deuxième valeur ($\alpha^{T2}$) du paramètre de réglage ($\alpha$) est déterminée en fonction d'un quotient (m) arrondi à l'entier inférieur de l'indicateur d'inconfort (DH, DH+($t_{incmax}$), DH-($t_{incmin}$)) par le critère d'évaluation ($DH_1$, $DH_2$, $DH_3$).

5. Procédé (200) selon l'une quelconque des revendications précédentes, comprenant une étape de définition (S0') dans laquelle un paramètre de préférence thermo-lumineux (j) est déterminé par un utilisateur.

6. Procédé (200) selon la revendication précédente, dans lequel le premier mode de pilotage ($M_{J\alpha(T1)}$) et le deuxième mode de pilotage ($M_{J\alpha(T2)}$) sont fonctions du paramètre de préférence thermo-lumineux (j).

7. Procédé (200) selon l'une quelconque des revendications 5 ou 6, dans lequel le paramètre de préférence thermo-lumineux (j) est sélectionné dans un ensemble discret ordonné de valeurs du paramètre de préférence thermo-lumineux (j).

8. Procédé (200) selon l'une quelconque des revendications précédentes, dans lequel le premier mode de pilotage ($M_{J\alpha(T1)}$) et/ou le deuxième mode de pilotage ($M_{J\alpha(T2)}$) comprend au moins un ratio de fermeture (R) de l'au moins une protection solaire (3) motorisée, en fonction d'une comparaison de la température intérieure ($t_{int}$) à une température d'actionnement minimale ($t^j_{min}$), et une température d'actionnement maximale ($t^j_{max}$).

9. Procédé (200) selon la revendication 8, dans lequel l'au moins une température d'inconfort ($t_{incmax}$) est déterminée en fonction de la température d'actionnement minimale ($t^j_{min}$).

10. Terminal d'une installation domotique (100) mettant en œuvre un procédé (200) selon l'une quelconque des revendications précédentes.

**[Fig. 1]**

1

100

102

104

3

3

108

106

**[Fig. 2]**

4

3

10

9

1

2

8

[Fig. 3]

[Fig. 4]

[Fig. 5]

Europäisches Patentamt
European Patent Office
Office européen des brevets

**RAPPORT DE RECHERCHE EUROPEENNE**

Numéro de la demande

**EP 25 17 4623**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2018/181085 A1 (GABRIEL CHADI [FR] ET AL) 28 juin 2018 (2018-06-28) * le document en entier * ----- | 1-10 | INV. G05B15/02 |
| A | US 2023/205160 A1 (BERMAN JOEL [US] ET AL) 29 juin 2023 (2023-06-29) * le document en entier * ----- | 1-10 | |
| A | US 2017/045868 A1 (CAVAREC PIERRE EMMANUEL [FR] ET AL) 16 février 2017 (2017-02-16) * le document en entier * ----- | 1-10 | |
| A | US 2017/241660 A1 (SEKAR PARTHIBARAJAN PERUMAL [IN] ET AL) 24 août 2017 (2017-08-24) * le document en entier * ----- | 1-10 | |

| DOMAINES TECHNIQUES RECHERCHES (IPC) |
|---|
| G05B |

Le présent rapport a été établi pour toutes les revendications

| Lieu de la recherche | Date d'achèvement de la recherche | Examinateur |
|---|---|---|
| La Haye | 4 septembre 2025 | José Luis Meseguer |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 25 17 4623

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-09-2025

| Document brevet cité au rapport de recherche | Date de publication | Membre(s) de la famille de brevet(s) | Date de publication |
|---|---|---|---|
| US 2018181085 A1 | 28-06-2018 | AU 2017279702 A1 | 12-07-2018 |
| | | AU 2019271910 A1 | 19-12-2019 |
| | | CN 108222382 A | 29-06-2018 |
| | | EP 3339988 A1 | 27-06-2018 |
| | | US 2018181085 A1 | 28-06-2018 |
| | | US 2021096521 A1 | 01-04-2021 |
| US 2023205160 A1 | 29-06-2023 | GB 2577574 A | 01-04-2020 |
| | | US 2022357714 A1 | 10-11-2022 |
| | | US 2023205160 A1 | 29-06-2023 |
| US 2017045868 A1 | 16-02-2017 | AU 2015250647 A1 | 10-11-2016 |
| | | CN 106255929 A | 21-12-2016 |
| | | EP 3134777 A1 | 01-03-2017 |
| | | FR 3020489 A1 | 30-10-2015 |
| | | US 2017045868 A1 | 16-02-2017 |
| | | WO 2015162359 A1 | 29-10-2015 |
| US 2017241660 A1 | 24-08-2017 | AUCUN | |

EPO FORM P0460

Pour tout renseignement concernant cette annexe : voir Journal Officiel de l'Office européen des brevets, No.12/82

**EP 4 650 889 A1**

## RÉFÉRENCES CITÉES DANS LA DESCRIPTION

**Documents brevets cités dans la description**

- EP 2682825 A